# EUROPEAN PATENT SPECIFICATION

(11) **EP 3 028 106 B1**
(45) Date of publication and mention of the grant of the patent: **24.04.2019**
(21) Application number: 14752973.9
(22) Date of filing: 31.07.2014
(51) Int. Cl.: F16K 17/04, G05D 16/06

(54) **FLUID REGULATORS HAVING CORRUGATED DIAPHRAGMS**
FLÜSSIGKEITSREGULATOREN MIT GEWELLTEN MEMBRANEN
RÉGULATEURS DE FLUIDE COMPRENANT DES MEMBRANES ONDULÉES

(43) Date of publication of application: 08.06.2016
(73) Proprietor: Emerson Process Management Regulator Technologies, Inc., McKinney, TX 75070 (US)
(72) Inventor: VASQUEZ, Ernesto, Mckinney, TX 75070 (US); GRIFFIN, James, Lyman, Jr., Mckinney, TX 75070 (US); LUKENSMEYER, Andrew, Jared, Mckinney, TX 75070 (US); DURANT, Tony, Alan, Mckinney, TX 75071 (US)
(74) Representative: Petraz, Gilberto Luigi
(86) International application number: PCT/US2014/049030
(87) International publication number: WO 2015/017608

(56) References cited:
- GB-A- 451 379
- GB-A- 1 230 715
- GB-A- 2 125 938
- US-A- 2 667 127
- US-A- 6 019 121
- US-A1- 2006 289 824

## Description

### FIELD OF THE DISCLOSURE

This patent relates generally to fluid regulators and, more particularly, to fluid regulators having corrugated diaphragms.

### BACKGROUND

Fluid regulators are commonly distributed throughout process control systems to control flow rates and/or pressures of various fluids (e.g. liquids, gases, etc.). Fluid regulators are commonly used to regulate the pressure of a fluid to a substantially constant value. In particular, a fluid regulator has an inlet and an outlet, either of which may supply the fluid that contacts a sensing element or a diaphragm within the regulator. In the case of a diaphragm fluid regulator, the fluid that contacts the diaphragm causes the diaphragm to displace to move a sealing element, which affects the amount of fluid flowing between the inlet and outlet.

Typically, a diaphragm within a fluid regulator is clamped at its peripheral edge between a bonnet and a valve body of the fluid regulator. Such a clamped connection at the periphery of the diaphragm can cause stress concentrations in the diaphragm. These stress concentrations can lead to premature failure or fatigue of the diaphragm and/or the diaphragm being pulled out of its peripheral constraints, thereby reducing the cycle life of the diaphragm and causing increased maintenance and costs.

Document GB 451 379 A discloses a conventional tool for the measurement and recording of air, gas, and liquid pressure.

### SUMMARY

One described example apparatus includes a valve body having an inlet and an outlet to allow fluid to flow therethrough, a backing plate disposed within a bonnet and coupled to the valve body, and first and second diaphragms. Each diaphragm has a corrugated profile and is in a stacked configuration. The diaphragms are operatively coupled to the backing plate and each of the diaphragms is clamped between the valve body and the bonnet proximate a peripheral edge of the diaphragm.

Another described example apparatus includes a valve body having an inlet and an outlet allowing fluid to flow therethrough, a fluid chamber disposed within the valve body, a plurality of diaphragms in a stacked configuration adjacent to the fluid chamber, each diaphragm has a corrugated profile. A first diaphragm is operatively coupled to a backing plate and a second diaphragm is operatively coupled to a valve stem. The apparatus also includes a bonnet containing the backing plate. The diaphragms are clamped between the valve body and the bonnet.

Another described example apparatus includes a plurality of diaphragms, each having a corrugated profile and in a stacked configuration. The diaphragms are constrained at their peripheral edges and adjacent to a fluid chamber. The apparatus also includes a valve stem operatively coupled to the diaphragms through apertures of the diaphragms.

### BRIEF DESCRIPTION OF THE DRAWINGS

FIG. 1 shows a known fluid regulator.
FIG. 2 is an exploded view of an example fluid regulator constructed in accordance with the teachings of this disclosure.
FIG. 3 is a cross-sectional view of the fluid regulator of FIG. 2.
FIG. 4 is a cross-sectional view of another example fluid regulator.
FIG. 5A is a cross-sectional view of the corrugated diaphragm of the example fluid regulator of FIGS. 2 and 3.
FIG. 5B is an enlarged cross-sectional view of a portion of the corrugated diaphragm of FIG 5A.
FIG. 5C is another enlarged cross-sectional view of an alternative portion of the corrugation that may be used to implement the diaphragm of FIG 5A.
FIG. 5D is a cross-sectional view of the corrugated diaphragm of the example fluid regulator of FIG. 4.
FIG. 5E is a cross-sectional view of another example corrugated diaphragm.
FIG. 5F is an enlarged cross-sectional view of a portion of the corrugated diaphragm of FIG. 5E.
FIG. 5G is an enlarged cross-sectional view of another portion of the corrugated diaphragm of FIG. 5E.
FIG. 6A is an enlarged cross-sectional view of the clamping assembly of the example fluid regulator of FIGS. 2 and 3.
FIG. 6B is a cross-sectional view of an example gasket.
FIG. 7 is an enlarged view of the center portion of the example fluid regulator of FIG. 4.
FIG. 8 is an enlarged cross-sectional view of the example bonnet of the fluid regulators of FIGS. 2, 3 and 6A.
FIG. 9 is an enlarged cross-sectional view of the example valve body of the fluid regulators of FIGS. 2, 3 and 6A.

### DETAILED DESCRIPTION

The figures are not to scale. Instead, to clarify multiple layers and regions, the thicknesses of the layers may be enlarged in the drawings. Wherever possible, the same reference numbers will be used throughout the drawing(s) and accompanying written description to refer to the same or like parts. As used in this patent, stating that any part (e.g., a layer, film, area, or plate) is in any way positioned on (e.g., positioned on, located on, disposed on, or formed on, etc.) another part, means that the referenced part is either in contact with the other part, or that the referenced part is above the other part with one or more intermediate part(s) located therebetween. Stating that any part is in contact with another part means that there is no intermediate part between the two parts.

Many known fluid regulators employ a diaphragm that interacts with a fluid in a sensing chamber. The fluid may displace the diaphragm which, in turn, displaces a valve stem. This displacement of the valve stem causes a sealing poppet, which is fixed to the valve stem, to displace, thereby altering the fluid flow and/or the pressure differential between an inlet and an outlet of the fluid regulator. Numerous cycles of diaphragm displacement may cause premature failure or cyclical loading failure (e.g., fatigue) due to stress concentrations. The geometry of the diaphragm and the manner in which the diaphragm is constrained (e.g., clamped) can have a significant impact on the stress concentrations occurring in the diaphragm. Additionally, the diaphragm or a portion of the diaphragm may eventually pull out of the constraints (e.g., become unclamped) at its periphery, resulting in performance degradation or loss of the fluid regulator's primary function.

In accordance with the teachings of this disclosure, the example fluid regulators described herein may implement a multiple diaphragm arrangement that interacts with fluid in a sensing chamber. More specifically, the example fluid regulators may utilize multiple diaphragms, each having a corrugated profile and in a stacked arrangement to substantially improve the distribution of stresses experienced by the diaphragms. In particular, the stacking of diaphragms having a corrugated profile substantially reduces tangential stresses experienced in the diaphragms. The reduction of these and other stresses results in greater overall reliability of the fluid regulator and reduced related repair costs.

In some examples described herein, the diaphragms have a central aperture in which a valve stem can be rigidly constrained to increase the accuracy of the movement of the valve stem. Additionally, some of the examples described herein include structures to increase the friction between the surfaces involved in clamping the diaphragms. This improves overall reliability of the fluid regulator by preventing the diaphragms from pulling out of a clamped joint. In particular, the structures constraining the diaphragms such as clamping surfaces of a valve body and/or a bonnet may include serrations or other irregularities on the clamping surfaces that contact the peripheral edges of the diaphragms to increase clamping friction. The increased friction may prevent the diaphragms from being disengaged from the clamping surfaces, thereby greatly improving reliability of the fluid regulator. To further increase friction at these peripheral regions of the diaphragms, the diaphragms may have serrations near their peripheral edges. Additionally or alternatively, for configurations where the valve stem is rigidly coupled to the diaphragms, the diaphragms may have serrations near their central portions to further increase the friction at the central portions. Other examples described herein include incorporating a gasket near the peripheral edges of the diaphragms to prevent the diaphragms from excessive displacements, which can result in high peak stresses and premature failure of the diaphragms.

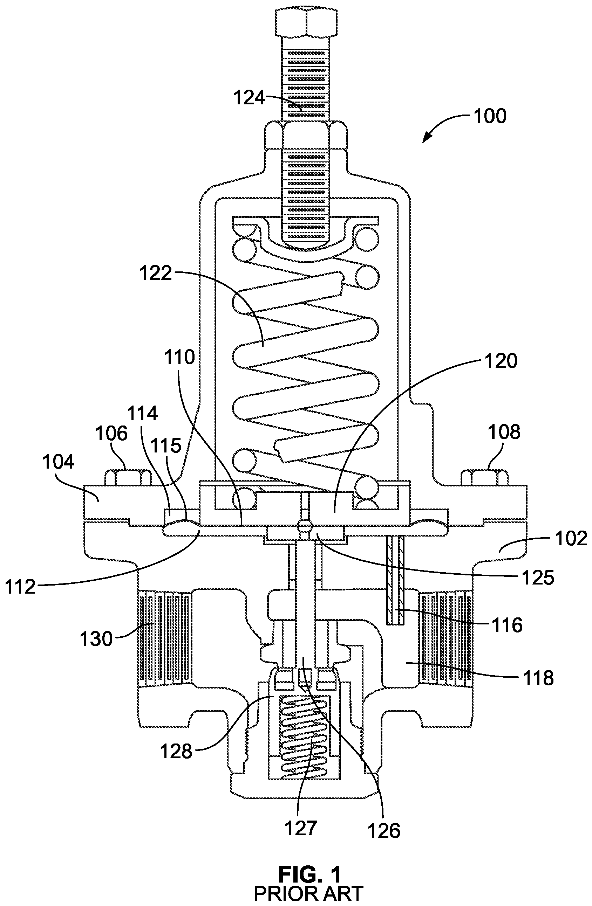

Before describing the example fluid regulators mentioned above, a brief description of a known fluid regulator is provided below in connection with FIG. 1. Turning to FIG. 1, a cross-sectional view of a fluid regulator 100 is provided. The fluid regulator 100 includes a valve body 102 coupled to a bonnet 104 with a plurality of fasteners 106, 108 spaced along an exterior edge of the valve body 102 and the bonnet 104 in a conventional manner. A diaphragm 110 is captured between the valve body 102 and the bonnet 104 and separates the space within the valve body 102 and the bonnet 104 into a fluid sensing chamber 112 and an atmospheric pressure chamber 114. Alternatively, the atmospheric chamber 114 may have a non-atmospheric pressure (e.g., for a pressure differential fluid regulator). The diaphragm 110 is convoluted and, thus, has a curved portion 115. For example, the curved portion 115 may have a wave-like cross-sectional shape with a single point of inflection.

A registration hole 116 allows fluid to flow from an outlet 118 to the fluid sensing chamber 112. A diaphragm backing plate 120 is operatively coupled to the diaphragm 110 and a spring 122, which provides a loading force to the backing plate 120. The amount of force provided by the spring 122 can be adjusted by turning an adjustment screw 124, which is threadably coupled to the bonnet 104. In this particular example, a stem plate 125 is fixed to a valve stem 126.

When pressure of the fluid at the outlet 118 decreases, the diaphragm 110 moves towards the valve body 102, counteracting the force of a spring 127, and displacing the valve stem 126, which is fixed to a sealing poppet 128. The corresponding movement of the sealing poppet 128 causes an opening between an inlet 130 and the outlet 118 to increase, thereby reducing the pressure differential between the inlet 130 and the outlet 118.

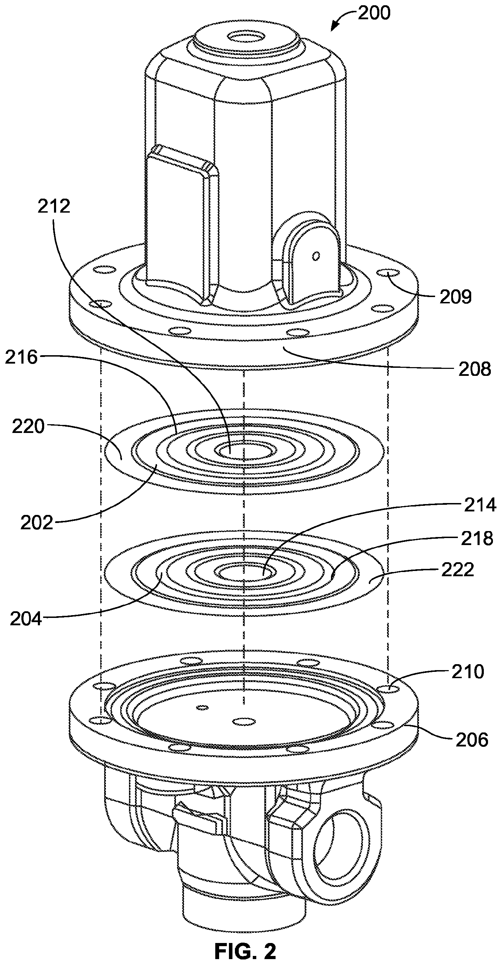

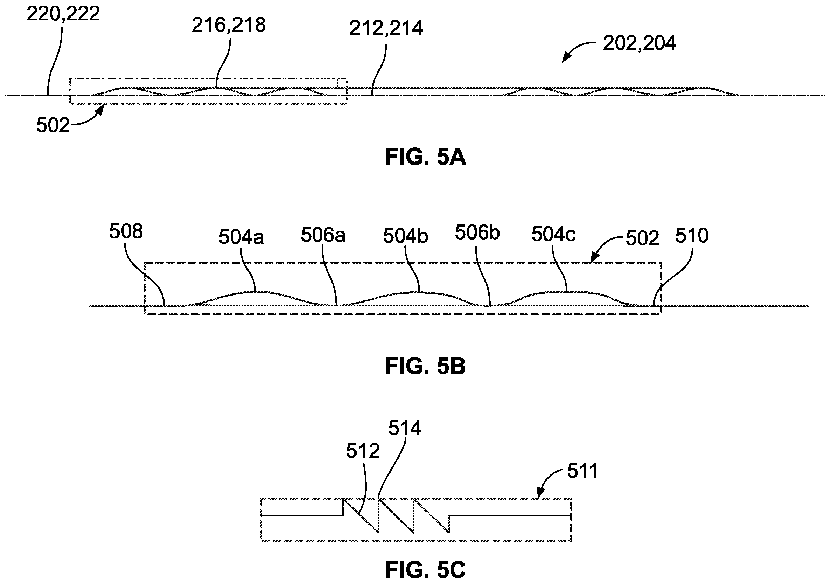

FIG. 2 is an exploded view of an example fluid regulator 200 constructed in accordance with the teachings of this disclosure. As depicted in FIG. 2, diaphragms 202 and 204 are clamped in a stacked configuration between a valve body 206 and a bonnet 208. The valve body 206 and the bonnet 208 are coupled by a plurality of fasteners passing through clearance holes 209 and engaging threaded holes 210. Each of the diaphragms 202, 204 has a corrugated profile to reduce peak stresses encountered within the diaphragms 202, 204 by at least reducing tangential stresses and also providing significantly more surface area to distribute stresses in comparison to a relatively flat profile or a singular curved portion as found in a convoluted diaphragm (e.g., the portion 115 of FIG. 2). Example corrugation profiles or geometries will be illustrated in further detail in connection with FIGS. 5B and 5C.

The diaphragms 202, 204 have respective flat central portions 212, 214, intermediate portions 216, 218 having the aforementioned corrugated profile and peripheral portions 220, 222, which are substantially flat. Arranging the diaphragms 202, 204 in a stacked configuration further reduces peak stresses within the diaphragms 202, 204, thereby improving cycle life of the diaphragms 202, 204 and improving overall reliability of the fluid regulator 200. While the example of FIG. 2 depicts two diaphragms, any other number of diaphragms may be used. Additionally, the diaphragms 202, 204 may be composed of metal, elastomer, and/or any other suitable material(s). The corrugation profile (e.g., dimensions of the height of the corrugations, etc.) may also differ between the diaphragms 202 and 204.

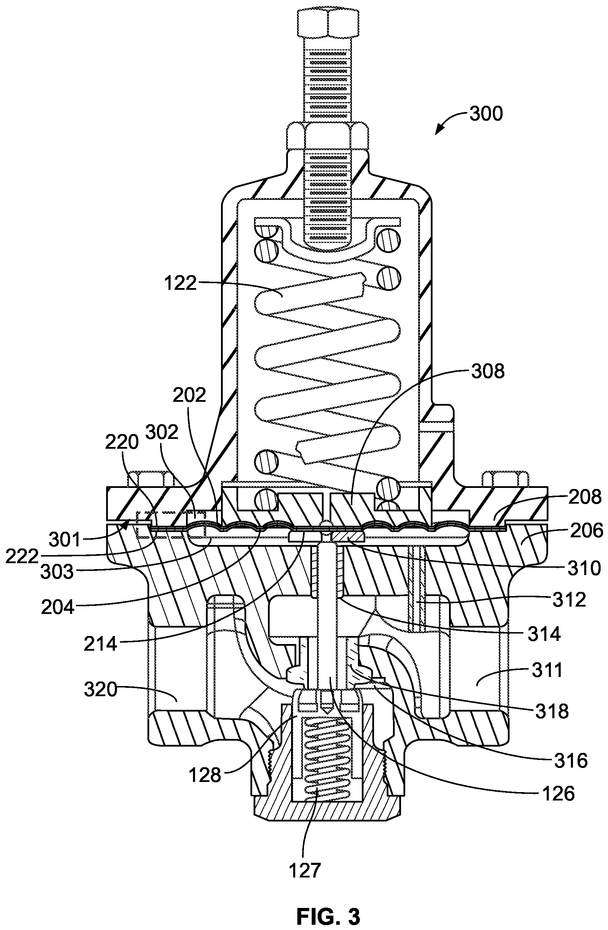

FIG. 3 is a cross-sectional view of the example fluid regulator 200 of FIG. 2. In this example, the diaphragms 202, 204 do not contain central apertures. The valve body 206 and the bonnet 208 clamp and constrain the diaphragms 202, 204 at their peripheral portions 220, 222 via a clamping assembly 301. A first one of the diaphragms 202 is adjacent to an atmospheric chamber 302, and the second diaphragm 204 is displaced by the fluid in a sensing chamber 303. In turn, the second diaphragm 204 pushes a valve stem plate 310 (i.e., a bump connection) which, in turn, displaces the valve stem 126 through movement of its central portion 214 resulting from fluid contact in the fluid sensing chamber 303. Additionally, the first diaphragm 202 may move upward to displace a backing plate 308, thereby counteracting the force of the spring 122, when the second diaphragm 204 displaces upward in response to fluid pressure in the sensing chamber 303.

In some examples, a lubricant may be applied between the diaphragms 202, 204 to substantially improve ease of assembly. Additionally or alternatively, lubricant may be applied between the backing plate 308 and the first diaphragm 202, and between the valve stem plate 310 and the second diaphragm 204 to further improve ease of assembly. The lubricant may be graphite-based for anti-seize applications or any other appropriate lubrication.

Similar to the fluid regulator 100, an outlet 311 is in fluid communication with the sensing chamber 303 through a registration hole 312. As a result, the sensing chamber 303 has the same fluid pressure as the outlet 311. The valve stem 126 moves along an axis of an opening 314 and is fixed to the sealing poppet 128. A chamber 316 contains the sealing poppet 128 and is adjacent to an orifice 318, which allows fluid communication from an inlet 320 to the outlet 311. Displacement of the diaphragm 204 counteracts the force of the spring 127 and causes the valve stem 126 to move, thereby pushing the sealing poppet 128 away from its sealing position. This movement of the sealing poppet 128 changes the size of the opening in the chamber 316 between the inlet 320 and the outlet 311, which alters the fluid flow therethrough.

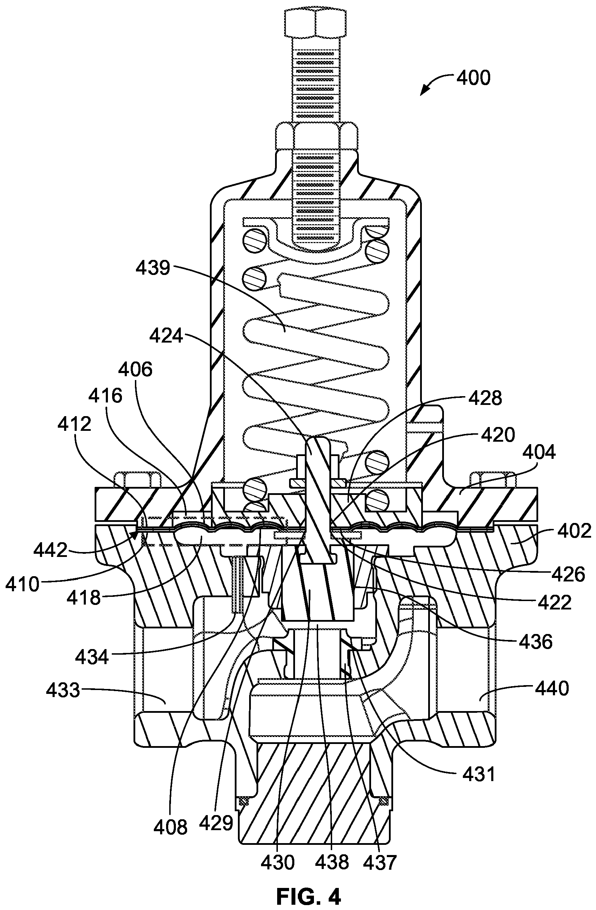

FIG. 4 is a cross-sectional view of another example fluid regulator 400. A valve body 402 and a bonnet 404 clamp and constrain first and second diaphragms 406, 408 at their peripheral portions 410, 412. The diaphragms 406, 408, which are adjacent to an atmospheric chamber 416, are displaced by the fluid in a sensing chamber 418. In this example, the diaphragms 406, 408 have respective central apertures 420, 422. A valve stem 424, which is fixed to a valve stem plate 426 and a backing plate 428, constrains the diaphragms 406, 408 and a gasket 429 between the valve stem plate 426 and the backing plate 428, thereby compressing the gasket 429 and sealing the central apertures 420, 422. The valve stem 424, which may be integral with the valve stem plate 426 and/or the backing plate 428, passes through the central apertures 420, 422 and is also fixed to a valve plug 430. Fixing the valve stem 424 to these components, which may be accomplished with a fastener, a weld or other manner, greatly increases the accuracy of the fluid regulator 400. In operation, the valve stem 424 is displaced by the diaphragms 406, 408 to cause the valve plug 430 to move away from a sealing position 431.

Similar to the fluid regulator 200, in some examples, a lubricant may be applied between the diaphragms 406, 408 to substantially improve ease of assembly. Additionally or alternatively, lubricant may be applied between the backing plate 428 and the first diaphragm 406, and between the valve stem plate 426 and the second diaphragm 408 to further improve ease of assembly. The lubricant may be graphite-based for anti-seize applications or any other appropriate lubrication.

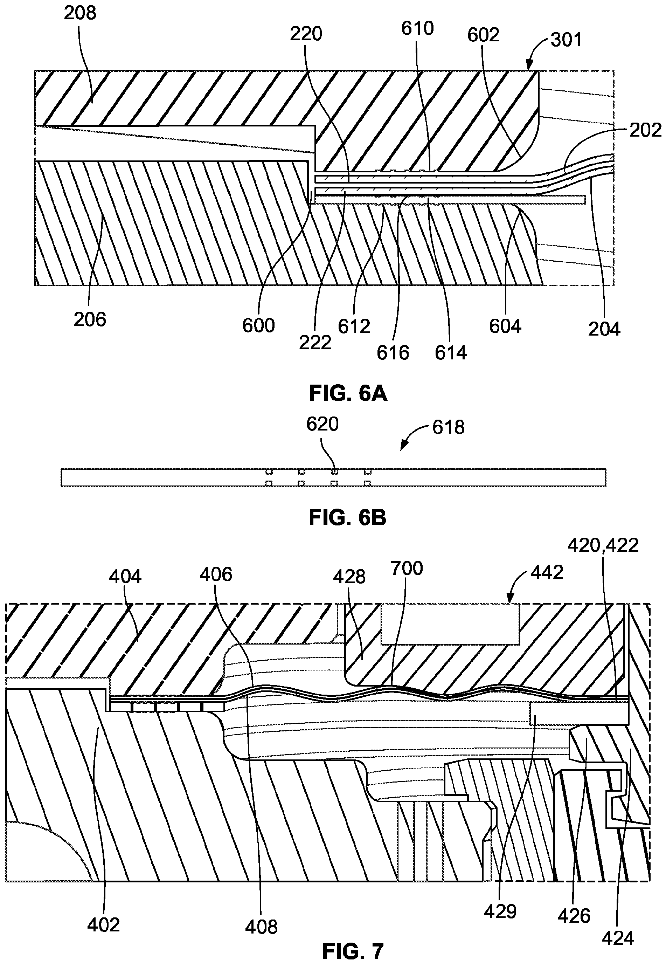

Similar to the fluid regulator 100, an inlet 433 is in fluid communication with the sensing chamber 418 through a registration hole 434. As a result, the sensing chamber 418 has the same fluid pressure as the inlet 433. The valve stem 424 moves along an axis of an aperture 436 and is rigidly fixed to the valve plug 430. A chamber 438 contains the valve plug 430 and is adjacent to an orifice 437, which allows fluid communication from the inlet 433 to an outlet 440. Displacement of the diaphragms 406, 408 towards the bonnet 404 counteracts the force of a spring 439 and causes the valve stem 424 to move, thereby pushing the valve plug 430 away from its sealing position 431. This movement of the valve plug 430 changes the size of the opening in the chamber 438 between the inlet 433 and the outlet 440, which alters the fluid flow therethrough. A center section 442 showing the center constraints of the diaphragms 406, 408 is discussed in detail below in connection with FIG. 7.

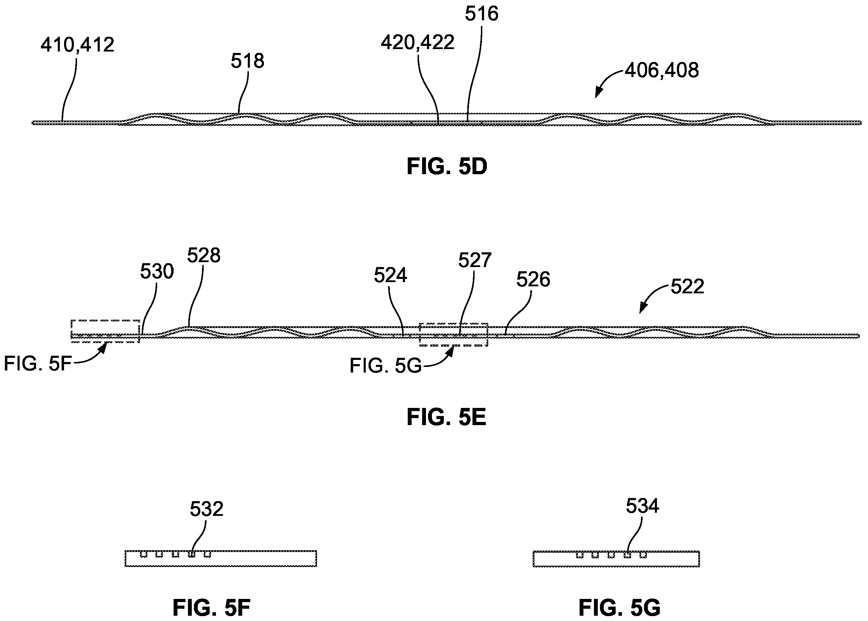

FIG. 5A is a cross-sectional view of the corrugated diaphragms 202, 204 of FIGS. 2 and 3. The diaphragms 406, 408 (and any other examples below) may also describe the features in connection with FIGS. 5B, 5C, 5F, and 5G. The central portions 212, 214 and the peripheral portions 220, 222 are relatively flat in comparison to the intermediate portions 216, 218, which have a corrugated annular profile region 502. In this particular example, the corrugated profile region 502 is depicted as having multiple curves, contours and/or points of inflection.

FIG. 5B is an enlarged view of the corrugated profile region 502, which flexes and bends during operation of the fluid regulator 200. In the orientation of FIG. 5B, the corrugated or non-planar profile region 502 has convolutions with a plurality of convex portions 504a, 504b, 504c and concave portions 506a, 506b. The concave portions 506a, 506b may range in height above and below relatively flat portions 508, 510. While this example depicts three convex portions 504a, 504b and 504c, any other number of convex portions or convolutions may be used. Each of the convex portions 504a, 504b, 504c and the concave portions 506a, 506b may have different radii of curvature along the corrugated profile 502. For example, the radius of the convex portion 504a may differ from the convex portion 504b. Similarly, the radii of curvature of the convex portions 504a, 504b, 504c may differ from each other and/or the concave portions 506a, 506b.

FIG. 5C depicts an alternative non-planar or corrugated profile 511 having relatively sharp edges or points of inflection. In contrast to the corrugated profile region 502, the corrugated profile 511 has numerous substantially linear portions 512, which are formed by relatively sharp edges 514. This profile may be made from formed sheet metal or any suitable material or process.

FIG. 5D depicts a cross-sectional view of the diaphragms 406, 408 of FIG. 4, which contain the apertures 420, 422 in a central portion 516. As discussed above, the central apertures 420, 422 may be used to couple the diaphragms 406, 408 to the backing plate 428 and the valve stem plate 426. The diaphragms 406, 408 have an intermediate portion 518 in addition to the aforementioned peripheral portions 410, 412.

FIG. 5E is a cross-sectional view of an example diaphragm 522 that has a plurality of apertures 524, 526, which may be used to operatively couple any plurality of the diaphragms 522 to the backing plate 428 and the valve stem plate 426 via the valve stem 424. The diaphragm 522 has a central portion 527, an intermediate portion 528, and a peripheral portion 530.

FIG. 5F shows an enlarged view of the peripheral portion 530 of the diaphragm 522 of FIG. 5E. In this example, the peripheral portion 530 has serrations 532 to increase friction.

FIG. 5G shows an enlarged view of the center portion 527 of FIG. 5E. In this example, the central portion 527 has serrations 534 to increase friction. A more detailed description of the serrations 532, 534 and their relationship to friction is provided below in conjunction with FIGS. 6A, 6B, and 7. The diaphragms 202, 204, 406, 408, 522 used in the fluid regulators 200, 400 may have any combination of apertures, serrations, etc.

FIG. 6A is an enlarged cross-sectional view of the clamping assembly 301 of the fluid regulator 200 of FIG. 3. The bonnet 208 and the valve body 206, as described above, are coupled together to clamp the diaphragms 202, 204. A recess 600 of the valve body 206 holds the peripheral regions 220, 222 of the diaphragms 202, 204. The bonnet 208 and the valve body 206 may have contoured (e.g., radiused) annular edges 602, 604 to prevent the diaphragms 202, 204 from experiencing localized stress concentrations as the peripheral regions 220, 222 of the diaphragms 202, 204 deflect and contact the bonnet 208 or the valve body 206.

Alternatively or additionally, surfaces 610, 612 may have serrations to increase friction between the diaphragms 202, 204 and the bonnet 208 and valve body 206 to prevent the peripheral regions 220, 222 of the diaphragms 202, 204 from being pulled out of the clamping assembly 301. The diaphragms 202, 204 may also have serrations in their peripheral regions 220, 222 (as shown in FIG. 5F) to further increase friction at the clamping joint.

A gasket 614 may be used to prevent the diaphragms 202, 204 from encountering excessive deflections at their peripheral regions 220, 222 and, thus, provide support and reduce overall stresses of the diaphragms 202, 204. Also, the gasket 614 provides additional surface area for the diaphragms 202, 204 to distribute stresses and further reduce overall peak stresses of the diaphragms 202, 204. Although the gasket 614 is depicted as being placed adjacent to the valve body 206, the gasket 614 may alternatively or additionally (i.e., multiple gaskets) be placed adjacent to the bonnet 208. The gasket 614 may have serrations 616 on the surface in contact with the diaphragms 202, 204 and may be made of composite, elastomer, plastic, metal or any other suitable material. Although only the gaskets 202, 204 are shown, the features described in FIG. 6A may be applied to the gaskets 406, 408, 522.

FIG. 6B shows a gasket 618 with serrations 620 on both sides. Although serrations are depicted in FIG. 6A as being on a single side of the gasket 614, such serrations may, for example, be used on both sides of the gasket 618 if the surface 612 does not have serrations. Likewise, if the surface 610 does not contain serrations, the gasket 618 could be placed adjacent to the surface 610.

FIG. 7 is an enlarged cross-sectional view of the center section 442 of the fluid regulator 400 of FIG. 4. The diaphragms 406, 408 are clamped between the valve body 402 and the bonnet 404. The backing plate 428 may include contours 700 to match the corrugation profile of the diaphragms 406, 408. The diaphragms 406, 408 and the gasket 429 are constrained between the backing plate 428 and the valve stem plate 426. In this specific example, the valve stem plate 426 is integral with the valve stem 424. The gasket 429 is compressed to maintain a seal through the apertures 420, 422. This compression is a result of the distance between the valve stem plate 426 and the backing plate 428 compressing the gasket 429 and the diaphragms 406, 408 via an interference fit (i.e., the combined thicknesses of the gasket 429 and the diaphragms 406, 408 being greater than the distance between the backing plate 428 and the valve stem plate 426). Although, diaphragms 406, 408 are shown in FIG. 7, such a clamping scheme may also apply to stacking a plurality of the diaphragms 522.

The diaphragms 406, 408, 522 may also have serrations in their central portions 516, 527 (as shown in FIG. 5G) to increase friction between the diaphragms 406, 408, 522 and the backing plate 428 and/or the valve stem plate 426. Increasing friction at these locations prevents the diaphragms 406, 408, 522 from being pulled out of the center constraints near the centers of the diaphragms 406, 408, 522, thereby improving reliability (e.g., cycle life) of the fluid regulator.

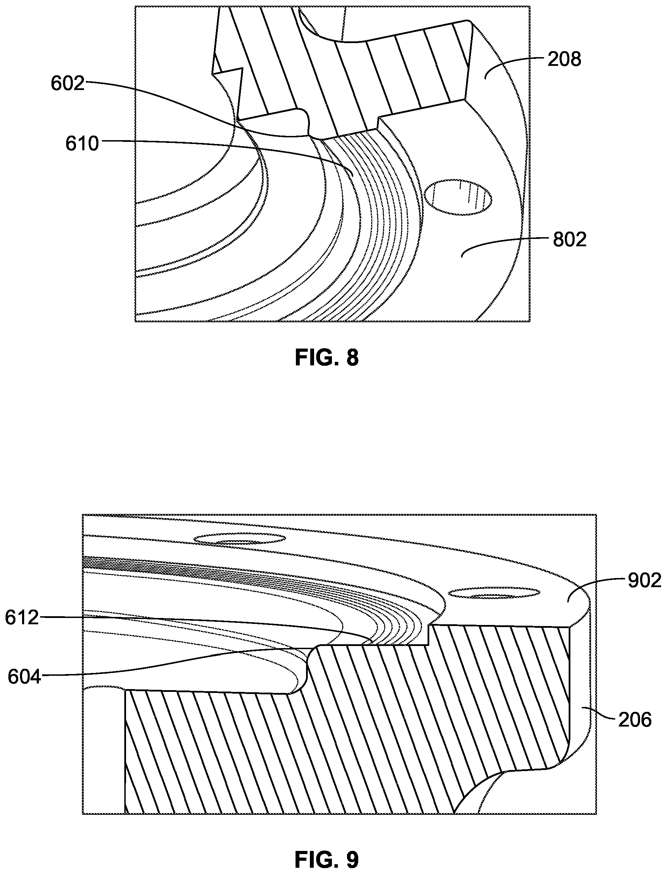

FIGS. 8 and 9 are enlarged cross-sectional views of the bonnet 208 and the valve body 206 of FIGS. 2, 3 and 6A. The bonnet 208 and the valve body 206 are coupled together at surfaces 802, 902 with a plurality of fasteners as discussed above. The peripheral regions 220, 222 of the gaskets 202, 204 are stacked and clamped between the surfaces 610, 612. In this example, the bonnet 208 and the valve body 206 have serrations at the surfaces 610, 612 to frictionally engage the diaphragms 202, 204. The surfaces 610, 612 provide a substantially tight seal when the diaphragms 202, 204 are clamped. The contoured annular edges 602, 604 allow the diaphragms 202, 204 to roll or flex about the annular edges 602, 604 without encountering the highly localized stress concentrations that would otherwise be experienced if they instead contacted relatively sharp edges. These example configurations and variations may also apply to the diaphragms 406, 408, 522, the valve body 402, the bonnet 404, etc.

Although certain example apparatus have been described herein, the scope of coverage of this patent is not limited thereto. On the contrary, this patent covers all methods, apparatus and articles of manufacture fairly falling within the scope of the amended claims either literally or under doctrine of equivalents.

## Claims

1. A fluid regulator (200, 400) comprising:
a valve body (206) having an inlet (320) and an outlet (311) to allow fluid to flow therethrough; and
a backing plate (308) disposed within a bonnet (208) and coupled to the valve body;
**characterized by**
first and second diaphragms (202, 204), each having a corrugated profile (502, 511) and in a stacked configuration, the diaphragms are operatively coupled to the backing plate, each of the diaphragms is clamped between the valve body and the bonnet proximate a peripheral edge of the diaphragm.

2. The fluid regulator as defined in claim 1, **characterized in that** each of the diaphragms has a central aperture (420, 422) to rigidly couple the diaphragms to the backing plate.

3. The fluid regulator as defined in claim 2, **characterized in that** each of the central apertures (420, 422) is to rigidly couple diaphragms to a valve stem (424) fixed to the backing plate.

4. The fluid regulator as defined in any of the preceding claims, **characterized in that** each of the diaphragms has serrations (532) proximate the peripheral edge of the diaphragm to increase friction between the diaphragms, the valve body and the bonnet.

5. The fluid regulator as defined in any of the preceding claims, **characterized in that** the valve body or the bonnet has serrations on the surface (610, 612) to increase friction between the first or the second diaphragm and the valve body or the bonnet.

6. The fluid regulator as defined in any of the preceding claims, **characterized in that** the valve body or the bonnet holds a gasket (614, 618) proximate the peripheral edges of the diaphragms.

7. The fluid regulator as defined in claim 6, **characterized in that** the gasket has serrations (616).

8. The fluid regulator as defined in any of the preceding claims, **characterized in that** the valve body or the bonnet comprises a contoured annular edge (602, 604) proximate the peripheral edges of the diaphragms.

9. The fluid regulator according to any one of the preceding claims, further **characterized by**:
a fluid chamber (303) disposed within the valve body;
the first and second diaphragms being in the stacked configuration adjacent to the fluid chamber, wherein the first diaphragm is operatively coupled to the backing plate, and
the second diaphragm is operatively coupled to a valve stem (424).

10. The fluid regulator as defined in any of the preceding claims, **characterized in that** each of the diaphragms has serrations proximate a center of the diaphragm.

11. The fluid regulator as defined in any of the preceding claims, **characterized in that** the valve body or the bonnet comprises an annular recess to hold peripheral edges of the diaphragms.

12. The fluid regulator as defined in any of the preceding claims, **characterized in that** each of the first and second diaphragms comprises flat central portions (212, 214), intermediate portions (216, 218) having the corrugated profile and flat peripheral portions (220, 222).

13. The fluid regulator as defined in any of the preceding claims, **characterized in that** the corrugated profile has convolutions with a plurality of convex portions (504a, 504b, 504c) and concave portions (506a, 506b).

14. The fluid regulator as defined in any of claims 1 to 12, **characterized in that** the corrugated profile has a plurality of substantially linear portions (512), which are formed by relatively sharp edges (514).

## Patentansprüche

1. Fluid-Regulator (200, 400), aufweisend:
einen Ventilkörper (206) mit einem Einlass (320) und einem Auslass (311), um es Fluid zu erlauben, dort hindurch zu strömen, und
eine Rückenplatte (308), die in einer Haube (208) angeordnet ist und mit dem Ventilkörper gekuppelt ist,
**gekennzeichnet durch**
ein erstes und ein zweites Diaphragma (202, 204), von denen jedes ein welliges Profil (502, 511) hat und die in gestapelter Konfiguration vorliegen, wobei die Diaphragmen mit der Rückenplatte wirkgekuppelt sind, wobei jedes der Diaphragmen proximal zu einem Umfangsrand des Diaphragmas zwischen den Ventilkörper und die Haube geklemmt ist.

2. Fluid-Regulator wie in Anspruch 1 definiert, **dadurch gekennzeichnet, dass** jedes der Diaphragmen eine zentrale Aussparung (420, 422) hat, um die Diaphragmen mit der Rückenplatte starr zu kuppeln.

3. Fluid-Regulator wie in Anspruch 2 definiert, **dadurch gekennzeichnet, dass** jede der zentralen Aussparungen (420, 422) vorliegt, um die Diaphragmen mit einem Ventilstößel (424) starr zu kuppeln, der an der Rückenplatte befestigt ist.

4. Fluid-Regulator wie in irgendeinem der vorhergehenden Ansprüche definiert, **dadurch gekennzeichnet, dass** jedes der Diaphragmen proximal zum Umfangsrand des Diaphragmas Zahnungen (532) hat, um Reibung zwischen den Diaphragmen, dem Ventilkörper und der Haube zu erhöhen.

5. Fluid-Regulator wie in irgendeinem der vorherigen Ansprüche definiert, **dadurch gekennzeichnet, dass** der Ventilkörper oder die Haube Zahnungen auf der Oberfläche (610, 612) hat, um Reibung zwischen dem ersten oder dem zweiten Diaphragma und dem Ventilkörper oder der Haube zu erhöhen.

6. Fluid-Regulator wie in irgendeinem der vorherigen Ansprüche definiert, **dadurch gekennzeichnet, dass** der Ventilkörper oder die Haube proximal zu den Umfangsrändern der Diaphragmen eine Dichtung (614, 618) hält.

7. Fluid-Regulator wie in Anspruch 6 definiert, **dadurch gekennzeichnet, dass** die Dichtung Zahnungen (616) hat.

8. Fluid-Regulator wie in irgendeinem der vorhergehenden Ansprüche definiert, **dadurch gekennzeichnet, dass** der Ventilkörper oder die Haube proximal zu den Umfangsrändern der Diaphragmen einen konturierten ringförmigen Rand (602, 604) hat.

9. Fluid-Regulator gemäß irgendeinem der vorhergehenden Ansprüche, ferner **gekennzeichnet durch**:
eine Fluidkammer (303), die im Ventilkörper angeordnet ist,
wobei das erste und das zweite Diaphragma benachbart zu der Fluidkammer in der gestapelten Konfiguration sind, wobei das erste Diaphragma mit der Rückenplatte wirkgekuppelt ist und das zweite Diaphragma mit einem Ventilstößel (424) wirkgekuppelt ist.

10. Fluid-Regulator wie in irgendeinem der vorhergehenden Ansprüche definiert, **dadurch gekennzeichnet, dass** jedes der Diaphragmen proximal zu einem Zentrum des Diaphragmas Zahnungen hat.

11. Fluid-Regulator wie in irgendeinem der vorhergehenden Ansprüche definiert, **dadurch gekennzeichnet, dass** der Ventilkörper oder die Haube eine ringförmige Aussparung aufweist, um Umfangsränder der Diaphragmen zu halten.

12. Fluid-Regulator wie in irgendeinem der vorhergehenden Ansprüche definiert, **dadurch gekennzeichnet, dass** jedes von dem ersten und dem zweiten Diaphragma flache zentrale Abschnitte (212, 214), Zwischenabschnitte (216, 218) mit dem welligen Profil und flache Umfangsabschnitte (220, 222) aufweist.

13. Fluid-Regulator wie in irgendeinem der vorhergehenden Ansprüche definiert, **dadurch gekennzeichnet, dass** das wellige Profil Wellen mit einer Mehrzahl von konvexen Abschnitten (504a, 504b, 504c) und konkaven Abschnitten (506a, 506b) aufweist.

14. Fluid-Regulator wie in irgendeinem der Ansprüche 1 bis 12 definiert, **dadurch gekennzeichnet, dass** das wellige Profil eine Mehrzahl von im Wesentlichen linearen Abschnitten (512) hat, die von relativ scharfen Rändern (514) gebildet sind.

## Revendications

1. Régulateur de fluide (200, 400) comprenant :
un corps de vanne (206) ayant une entrée (320) et une sortie (311) pour permettre au fluide de s'écouler à travers celui-ci ; et
une plaque de support (308) disposée dans un chapeau (208) et couplée au corps de vanne ;
**caractérisé par**
des première et seconde membranes (202, 204), chacun ayant un profil ondulé (502, 511), et dans une configuration empilée, les membranes sont couplées de manière opérationnelle à la plaque de support, chacun des membranes est immobilisée entre le corps de vanne et le chapeau à proximité un bord périphérique de la membrane.

2. Régulateur de fluide selon la revendication 1, **caractérisé en ce que** chacune des membranes présente une ouverture centrale (420, 422) pour coupler les membranes à la plaque de support de manière rigide.

3. Régulateur de fluide selon la revendication 2, **caractérisé en ce que** chacune des ouvertures centrales (420, 422) est destinée à coupler de manière rigide les membranes à une tige de vanne (424) fixée à la plaque de support.

4. Régulateur de fluide selon l'une quelconque des revendications précédentes, **caractérisé en ce que** chacun des membranes possède des dentelures (532) à proximité du bord périphérique de la membrane pour augmenter le frottement entre les membranes, le corps de vanne et le chapeau.

5. Régulateur de fluide selon l'une quelconque des revendications précédentes, **caractérisé en ce que** le corps de vanne ou le chapeau a des dentelures sur la surface (610, 612) pour augmenter le frottement entre la première ou la seconde membrane et le corps de vanne ou le chapeau.

6. Régulateur de fluide selon l'une quelconque des revendications précédentes, **caractérisé en ce que** le corps de vanne ou le chapeau comporte un joint (614, 618) à proximité des bords périphériques des membranes.

7. Régulateur de fluide selon la revendication 6, **caractérisé en ce que** le joint d'étanchéité présente des dentelures (616).

8. Régulateur de fluide selon l'une quelconque des revendications précédentes, **caractérisé en ce que** le corps de vanne ou le chapeau comprend un bord annulaire profilé (602, 604) à proximité des bords périphériques des membranes.

9. Régulateur de fluide selon l'une quelconque des revendications précédentes, **caractérisé en outre par** :
une chambre à fluide (303) disposée à l'intérieur du corps de vanne ;
les première et seconde membranes se trouvant dans la configuration empilée adjacentes à la chambre à fluide, dans lequel la première membrane est couplée de manière opérationnelle à la plaque de support, et la seconde membrane est couplée de manière opérationnelle à une tige de vanne (424).

10. Régulateur de fluide selon l'une quelconque des revendications précédentes, **caractérisé en ce que** chacun des membranes a des dentelures proches d'un centre de la membrane.

11. Régulateur de fluide selon l'une quelconque des revendications précédentes, **caractérisé en ce que** le corps de vanne ou le chapeau comprend un évidement annulaire pour maintenir les bords périphériques des membranes.

12. Régulateur de fluide selon l'une quelconque des revendications précédentes, **caractérisé en ce que** chacune des première et seconde membranes comprend des parties centrales plates (212, 214), des parties intermédiaires (216, 218) ayant le profil ondulé et des parties périphériques plates (220, 222).

13. Régulateur de fluide selon l'une quelconque des revendications précédentes, **caractérisé en ce que** le profil ondulé présente des convolutions avec une pluralité de parties convexes (504a, 504b, 504c) et de parties concaves (506a, 506b).

14. Régulateur de fluide selon l'une quelconque des revendications 1 à 12, **caractérisé en ce que** le profil ondulé présente une pluralité de parties sensiblement linéaires (512), qui sont formées par des bords relativement aigus (514).
